# FASCICULE DE BREVET EUROPEEN

(11) **EP 2 815 965 B1**
(45) Date de publication et mention de la délivrance du brevet: **27.07.2016**
(21) Numéro de dépôt: 14001812.8
(22) Date de dépôt: 23.05.2014
(51) Int. Cl.: B64C 27/00, B64D 35/08, F02C 3/30, F02C 6/02, F02C 7/14

(54) **Installation motrice multimoteur munie d'un système de secours d'injection de fluide, et aéronef**
Mehrmotoriges Antriebssystem ausgestattet mit einem Sicherheitssystem zum Einspritzen eines Fluids, und Flugzeug
Multimotor propulsion installation equipped with a fluid injection safety system, and aircraft

(30) Priorité: 19.06.2013 FR 1301420
(43) Date de publication de la demande: 24.12.2014
(60) Demande divisionnaire: 15175625.1
(73) Titulaire: Airbus Helicopters, 13725 Marignane Cedex (FR)
(72) Inventeur: Dyrla, Frédéric, 13320 Bouc bel Air (FR); Stephant, Romain, 13100 Aix en Provence (FR)
(74) Mandataire: GPI & Associés

(56) Documents cités:
- EP-A1- 2 333 247
- WO-A1-2014/096694
- FR-A1- 2 859 761
- GB-A- 2 079 707
- US-A- 3 434 281
- US-A- 3 518 023

## Description

La présente invention concerne une installation motrice bimoteur munie d'un système de secours d'injection de fluide, ainsi qu'un aéronef.

Plus particulièrement, l'invention se rapporte à une installation motrice d'un giravion, et notamment d'un hélicoptère. Le domaine technique de l'invention est donc le domaine technique des installations motrices, notamment d'aéronefs de type giravion.

En effet, un giravion comporte une installation motrice pour mettre en rotation sa voilure tournante. L'installation motrice est munie d'un ou plusieurs moteurs thermiques pour mettre en mouvement les engrenages d'une boîte de transmission de puissance, dénommée boîte de transmission principale de puissance pour un hélicoptère, cette boîte de transmission de puissance entraînant alors en rotation la voilure tournante.

Par ailleurs, il est à noter que l'on entend dans l'ensemble du texte par « moteur thermique » des turbomoteurs ou encore des moteurs à pistons par exemple.

Chaque moteur thermique est à même de fonctionner à une pluralité de régimes de fonctionnement.

Par exemple, les limitations thermiques d'un moteur thermique et les limitations en couple de la boîte de transmission de puissance permettent de définir trois régimes normaux d'utilisation du moteur thermique d'un giravion:
- le régime de décollage, correspondant à une utilisation n'endommageant pas ni la boîte de transmission principale et ni le moteur thermique pendant une durée limitée de décollage, variant usuellement entre cinq et trente minutes: c'est la puissance maximale au décollage (PMD),
- le régime maximal continu correspondant à une utilisation n'endommageant pas ni la boîte de transmission principale et ni le moteur thermique pendant une durée illimitée: c'est la puissance maximale continue (PMC),
- le régime maximal en transitoire, buté ou non par la régulation : on parle alors de puissance maximale en transitoire (PMT).

Il existe aussi des régimes de surpuissance en urgence sur les giravions multimoteur, utilisés en cas de panne d'un turbomoteur:
- le premier régime d'urgence pendant lequel les possibilités de la boîte de transmission principale sur les étages d'entrée et les possibilités thermiques du moteur thermique sont utilisées au maximum : on parle de puissance de super urgence (PSU) utilisable pendant trente secondes consécutives, au maximum, et au moins trois fois pendant un vol. L'utilisation de la PSU peut entraîner la dépose et la révision du moteur thermique;
- le deuxième régime d'urgence pendant lequel les possibilités de la boîte de transmission principale sur les étages d'entrée et les possibilités du moteur thermique sont largement utilisées : on parle alors de puissance maximale d'urgence (PMU) utilisable pendant deux minutes après la PSU ou deux minutes trente secondes consécutives, au maximum ;
- le troisième régime d'urgence pendant lequel les possibilités de la boîte de transmission principale sur les étages d'entrée et les possibilités thermiques du moteur thermique sont utilisées sans endommagement : on parle de puissance intermédiaire d'urgence (PIU) utilisable trente minutes ou en continu pour le reste du vol après la panne du moteur thermique.

Cependant, la puissance développée par le moteur thermique durant un régime peut s'avérer limite dans des conditions particulières, dans une atmosphère chaude par exemple.

Il est alors connu d'injecter un fluide dans un moteur thermique pour augmenter sa puissance. Le fluide peut notamment être de l'eau pure ou un mélange d'eau et d'alcool. Par exemple, sur un turbomoteur à turbine libre, on peut injecter un fluide à base d'eau pour augmenter la puissance développée par le turbomoteur, sans augmenter la température des gaz à la sortie de la chambre de combustion de ce turbomoteur.

La notion visant à injecter de l'eau pure a été utilisée sur les moteurs à pistons durant la seconde guerre mondiale puis sur les avions à turboréacteurs.

L'eau peut être injectée dans la chambre de combustion du moteur thermique. Par suite, la constitution des gaz générés par le générateur de gaz change. Il en résulte une modification de la capacité calorifique et de l'enthalpie massique de ces gaz. A iso-débit de gaz créé dans la chambre de combustion, la puissance générée par le moteur thermique augmente avec l'enthalpie massique des gaz créés.

Lorsque le moteur thermique est un turbomoteur muni d'un générateur de gaz comportant une entrée d'air et un compresseur en amont d'une chambre de combustion, l'eau peut être injectée dans l'entrée d'air.

Dans ce cas, le débit massique total à travers l'entrée d'air est augmenté, apportant un surplus de puissance à iso-enthalpie massique. La puissance disponible à iso-température de combustion et à iso-débit d'air est plus importante.

Cependant, le débit carburant est également augmenté à iso-température de combustion et iso-débit d'air.

L'injection d'un fluide peut se faire sous forme de brouillard.

Par suite, un système de secours d'injection de fluide peut être utilisé sur un aéronef multimoteur lors de la panne d'un moteur pour augmenter la puissance des moteurs en fonctionnement. Toutefois, un tel système peut s'avérer délicat à mettre au point pour respecter des objectifs de sécurité élevés. Un tel système de secours peut aussi être difficilement testé.

Ainsi, un système de secours peut comporter une pompe pour acheminer un fluide à base d'eau vers un moteur thermique afin d'augmenter sa puissance. Cependant, les exigences de sécurité peuvent alors imposer de redonder cette pompe ce qui conduit à un système relativement lourd et/ou encombrant.

Le document FR2859761 présente un système de protection vis-à-vis d'une surcontrainte d'un moteur à turbine. Ce système comporte un dispositif d'injection pour injecter un agent de refroidissement à l'intérieur du moteur lorsque la température de sortie des gaz excède une température de sécurité.

Le dispositif d'injection comporte un réservoir connecté à un injecteur par un conduit. Une pompe et une vanne sont alors disposées le long du conduit.

Le document US5784875 indique que la combustion de carburant dans un turbomoteur génère la création de polluants : les oxydes d'azote, dénommés NOX.

Ce document US5784875 décrit un dispositif pour réduire l'émission de NOX en injectant de l'eau dans la chambre de combustion. Le dispositif comprend une conduite d'acheminement d'air prélevé sur le moteur munie d'une première vanne et une conduite d'acheminement d'eau munie d'une deuxième vanne. Le dispositif ouvre alors la première vanne et la deuxième vanne pour injecter dans la chambre de combustion un mélange contenant l'air prélevé, l'eau et du carburant.

Le document FR 2826094 dévoile un système de lubrification et de refroidissement d'un ensemble mécanique comportant un dispositif de lubrification de secours, mis en fonctionnement automatiquement ou manuellement lorsque le dispositif principal est défaillant. Le dispositif de secours indépendant comporte au moins un réservoir de liquide de lubrification et de refroidissement; au moins une source de gaz sous basse pression; au moins une buse de pulvérisation qui est alimentée, d'une part, en liquide de lubrification et de refroidissement sous pression à partir du réservoir et, d'autre part, en gaz sous pression à partir de ladite source et qui est apte à pulvériser sur l'ensemble mécanique un brouillard de liquide de lubrification et de refroidissement pour suppléer temporairement le dispositif principal défaillant.

Le document EP2333247 concerne un procédé pour augmenter la sécurité d'une installation motrice munie d'au moins un moteur thermique et d'une boîte de transmission de puissance, le moteur thermique entraînant la boîte de transmission de puissance. Cette boîte de transmission de puissance comprend un système de lubrification réalisé à l'aide d'un moyen aqueux stocké dans un réservoir. Dès lors, on injecte selon ce procédé un fluide comprenant de l'eau dans le moteur thermique pour augmenter la puissance développée par le moteur thermique sans augmenter la température d'un organe du moteur thermique, ou pour diminuer cette température sans modifier la puissance développée par le moteur thermique, le fluide étant prélevé dans ledit réservoir.

On connait aussi les documents US 3434281, US 3518023 et GB 2079707.

La présente invention a alors pour objet une installation motrice munie d'un système de secours d'injection de fluide permettant de répondre à des objectifs de sécurité élevés et/ou d'être testé préalablement au vol d'un aéronef muni de ce système par exemple.

Selon l'invention, une installation motrice est munie d'un premier turbomoteur et d'un deuxième turbomoteur comportant chacun un générateur de gaz, cette installation motrice ayant un système de secours d'injection de fluide dans les turbomoteurs, le système comportant un réservoir contenant un fluide aqueux. Cette installation motrice est notamment remarquable en ce qu'elle comporte :
- une première conduite de pressurisation et une deuxième conduite de pressurisation reliant respectivement au réservoir un premier générateur de gaz du premier turbomoteur et un deuxième générateur de gaz du deuxième turbomoteur pour pressuriser le fluide contenu dans le réservoir avec un gaz prélevé sur chaque générateur de gaz,
- un organe d'injection par turbomoteur comportant au moins une buse d'injection dudit fluide, un premier dispositif d'injection comportant une première conduite d'injection reliant le réservoir à un premier organe d'injection du premier turbomoteur, un deuxième dispositif d'injection comportant une deuxième conduite d'injection reliant le réservoir à un deuxième organe d'injection du deuxième turbomoteur,
- un distributeur disposé le long de chaque conduite d'injection, un premier distributeur de la première conduite d'injection communiquant avec la deuxième conduite de pressurisation pour qu'une panne du deuxième turbomoteur entraîne l'ouverture du premier distributeur, et un deuxième distributeur de la deuxième conduite d'injection communiquant avec la première conduite de pressurisation pour qu'une panne du premier turbomoteur entraîne l'ouverture du deuxième distributeur,
- au moins un calculateur, chaque conduite d'injection comportant une vanne débimétrique pilotée par ledit calculateur.

Le fluide peut être de l'eau pure ou encore un mélange contenant de l'eau, tel qu'une mélange d'eau et d'alcool par exemple.

Plus particulièrement, l'installation motrice est une installation motrice d'un aéronef.

Lorsqu'un des turbomoteurs est hors d'usage, le turbomoteur restant en fonctionnement met en oeuvre des régimes d'urgence.

De plus, le distributeur relié au turbomoteur en panne n'est plus alimenté en gaz par ce turbomoteur. Sous l'effet de la diminution de la pression du gaz provenant du turbomoteur en panne suite à cette panne, ce distributeur s'ouvre alors automatiquement et permet l'injection du fluide dans le turbomoteur restant en fonctionnement. Cette injection de fluide permet d'augmenter la puissance développée par le turbomoteur restant en fonctionnement.

L'invention propose donc un système de secours d'injection de fluide simple pour injecter un fluide dans un turbomoteur pour augmenter sa puissance. Cette augmentation de puissance permet par exemple de maximiser la charge utile de l'aéronef.

Ce système de secours d'injection de fluide profite avantageusement d'une source de pression disponible sur les turbomoteurs. Par exemple, chaque générateur de gaz comportant au moins un étage de compression, chaque conduite de pressurisation peut déboucher en aval d'un étage de compression. Le terme aval fait référence au sens de circulation de l'air dans le générateur de gaz.

Par exemple, chaque conduite de pressurisation comporte une prise de pression disposée à la sortie d'un étage de compression, voire entre deux étages de compression.

Ce système de secours d'injection de fluide ne nécessite donc pas la mise en oeuvre de pompes. Au contraire, le système de secours d'injection de fluide met en oeuvre de simples conduites et des distributeurs fonctionnant mécaniquement par exemple.

Dès lors, le système de secours d'injection de fluide présente une fiabilité intéressante.

Le gaz provenant des turbomoteurs pour alimenter le réservoir assure alors une pressurisation à une pression quasi-constante du réservoir permettant ainsi l'injection d'un fluide dans les turbomoteurs à un débit quasi-constant, calibré par exemple par les dimensions des injecteurs.

Contrairement au document US5784875, l'air prélevé sur les turbomoteurs est utilisé notamment pour mettre le circuit de fluide en pression, mais n'est pas injecté avec un fluide dans un turbomoteur.

Ce gaz permet aussi une détection automatique et instantanée de la perte de puissance sur un turbomoteur nécessitant alors l'injection de fluide sur l'autre turbomoteur, au travers des distributeurs.

Ce système de secours d'injection de fluide permet donc d'éviter l'implémentation de pompes par nature lourdes en augmentant la sécurité du système de secours d'injection de fluide, grâce à un dispositif automatique et autonome. En effet, le système de secours d'injection de fluide s'avère fiable en l'absence de pompe électrique, et réactif par la pressurisation permanente du réservoir.

L'utilisation de gaz prélevés sur les turbomoteurs peut paraître contradictoire avec le but à atteindre, à savoir l'augmentation de la puissance des turbomoteurs. Or, le débit de gaz à prélever sur les turbomoteurs pour assurer le fonctionnement est étonnamment infinitésimal par rapport au débit d'air du turbomoteur durant un régime de fonctionnement d'urgence, de l'ordre de 0.01% de ce débit d'air par exemple, et n'a donc pas d'impact détectable sur les performances de ce turbomoteur

En outre, on verra par la suite que le système d'injection de fluide de secours peut être aisément testé.

L'installation motrice peut aussi comporter une ou plusieurs des caractéristiques qui suivent.

Par exemple, le réservoir peut comporter un clapet de surpression pour régler la pression du fluide dans le réservoir.

En outre, le réservoir peut comporter un clapet de dépressurisation pour faire baisser la pression dans le réservoir. Ce clapet de dépressurisation peut être utilisé avant l'ouverture du réservoir pour une visite de maintenance notamment.

Par ailleurs, l'installation motrice peut comporter un dispositif de refroidissement agencé sur chaque conduite d'injection. Un tel dispositif est par exemple muni d'ailettes disposées sur les conduites d'injection dans des zones chaudes de l'aéronef pour refroidir le fluide avant son injection dans un turbomoteur.

A l'inverse, les conduites d'injection peuvent transiter dans des zones chaudes de l'aéronef si nécessaire pour réchauffer ce fluide.

En outre, l'installation motrice peut comporter un piston calorifugé agencé dans le réservoir entre le fluide et les gaz provenant des turbomoteurs. Ce piston calorifugé vise à au moins limiter l'échauffement du fluide dans le réservoir sous l'effet de l'air chaud provenant des turbomoteurs.

Ce réservoir peut être partagé en deux contenants, chaque contenant étant relié à une unique conduite d'injection. Le réservoir est ainsi muni d'un contenant par turbomoteur.

Par ailleurs, l'installation motrice peut comporter une conduite de secours reliant le réservoir à une boîte de transmission de puissance mise en mouvement par les turbomoteurs.

La conduite peut comprendre une vanne commandée par un dispositif d'alarme relatif à un problème de lubrification de la boîte de transmission de puissance, ou par un dispositif effectuant une comparaison entre la valeur de la pression du circuit de lubrification de la boîte de transmission de puissance et la valeur de la pression régnant dans la conduite de secours par exemple.

L'installation motrice peut aussi comporter un système d'activation manuel manoeuvrable par un pilote pour injecter un fluide dans les turbomoteurs. Ce système peut prévoir une vanne par conduite de pressurisation simulant la panne d'un turbomoteur sur requête d'un pilote éventuellement.

Par ailleurs, chaque conduite de pressurisation comporte un clapet anti-retour. Les clapets anti-retour visent à éviter toute ré-ingestion de vapeurs de fluide dans les générateurs de gaz, lors des variations de régimes du générateur de gaz et donc de variation de la pression des gaz prélevés sur les turbomoteurs.

Chaque conduite de pressurisation comporte éventuellement un filtre pour filtrer le gaz prélevé sur les turbomoteurs.

En outre, le réservoir peut comporter un capteur de niveau. Un tel capteur de niveau permet de détecter une éventuelle fuite. En effet, en l'absence de panne d'un turbomoteur, le niveau de fluide dans le réservoir doit rester constant.

Selon une première réalisation, chaque distributeur comporte un orifice d'entrée relié au réservoir et un piston apte à obturer cet orifice d'entrée, un ressort tendant à éviter l'obturation de l'orifice d'entrée, le distributeur étant relié à une conduite de pressurisation en aval du piston pour que la pression d'un gaz présent dans cette conduite de pressurisation plaque ledit piston contre ledit orifice.

Le distributeur s'étend donc d'une extrémité munie d'un orifice d'entrée relié au réservoir, vers une extrémité munie d'un orifice de sortie relié à un organe d'injection. La conduite de pressurisation débouche alors entre le piston et l'orifice de sortie.

Le ressort vise à éviter des perturbations liées à des petites variations de débit d"air prélevé sur le turbomoteur et alimentant le distributeur.

Selon une deuxième réalisation, chaque distributeur est relié à la première conduite de pressurisation et à la deuxième conduite de pressurisation.

Une différence de pression entre ces conduites de pressurisation peut conduire à l'ouverture d'un distributeur.

L'installation motrice comporte au moins un calculateur, chaque conduite d'injection comportant une vanne débimétrique commandée par ledit au moins un calculateur.

Un turbomoteur est usuellement commandé par un calculateur moteur, connu sous l'acronyme FADEC. Le calculateur commandant des vannes des conduites d'injection peut donc être un FADEC.

Par conséquent un double dispositif permet d'autoriser l'injection de fluide.

Un premier dispositif consiste en l'implémentation de distributeurs commandés par de l'air prélevé sur les générateurs de gaz des turbomoteurs.

En cas de panne d'un turbomoteur, un distributeur autorise l'injection de secours de fluide.

Toutefois, cette injection n'est pas nécessaire dans toutes les situations. L'injection aura alors lieu seulement lorsqu'un mode de fonctionnement d'urgence est déclenché et que le besoin en puissance dépasse un seuil. A l'aide d'un second dispositif, cette injection a donc lieu si nécessaire sur ordre d'un calculateur commandant une vanne d'une conduite d'injection, telle qu'une électrovanne. Une telle vanne peut aussi permettre de régler le débit d'injection du fluide le cas échéant.

Par ailleurs, l'installation motrice peut comporter un premier capteur pour mesurer la pression du fluide dans le réservoir et un deuxième capteur par conduite d'injection pour mesurer la pression dans chaque conduite d'injection.

La simple implémentation de capteurs permet de tester le bon fonctionnement du système de secours d'injection de fluide.

En outre, l'installation motrice peut comporter une vanne débitmétrique pilotée par le calculateur et agencée sur chaque conduite d'injection

Outre une installation motrice, l'invention vise un aéronef comportant cette installation motrice.

La présente invention a aussi pour objet le procédé de fabrication du dispositif précité.

L'invention et ses avantages apparaîtront avec plus de détails dans le cadre de la description qui suit avec des exemples de réalisation donnés à titre illustratif en référence aux figures annexées qui représentent :
- la figure 1, un schéma d'une première réalisation, et
- la figure 2, un schéma d'une deuxième réalisation.

Les éléments présents dans plusieurs figures distinctes sont affectés d'une seule et même référence.

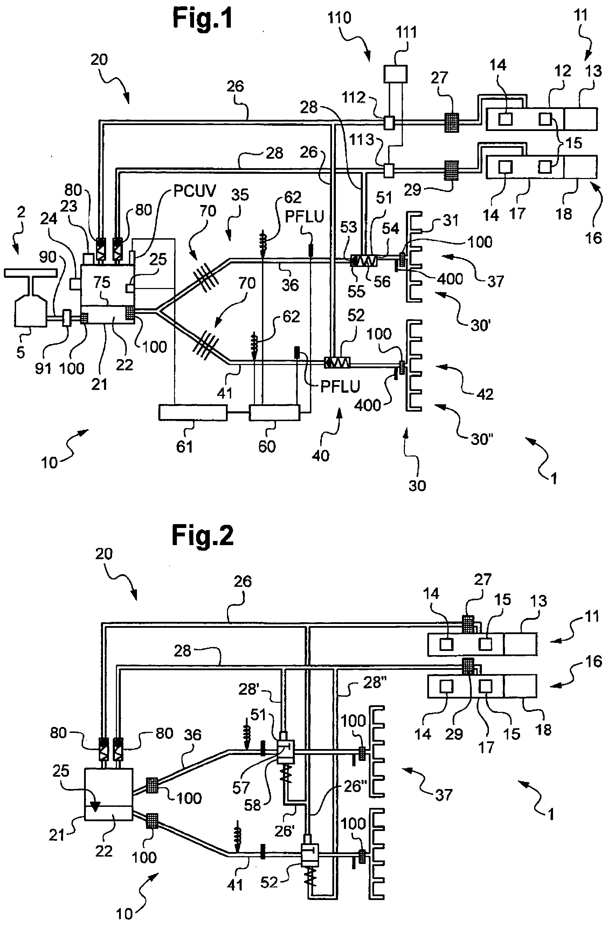

Les figures 1 et 2 présentent un aéronef 1 selon l'invention.

Cet aéronef 1 comprend une installation motrice 10 pour mettre par exemple en rotation une voilure tournante 2. Dès lors, l'installation motrice 10 comporte un premier turbomoteur 11 et un deuxième turbomoteur 16 mettant éventuellement en mouvement une boîte de transmission de puissance 5.

Chaque turbomoteur 11 comporte un générateur de gaz 12 pour entraîner en rotation une turbine de travail 13. Le générateur de gaz comprend au moins un étage de compression 14, 15 alimentant en air compressé une chambre de combustion non représentée.

Ainsi, l'installation motrice comprend un premier turbomoteur 11 muni d'un premier générateur de gaz 12, et un deuxième turbomoteur 16 muni d'un deuxième générateur de gaz 17.

Par ailleurs, l'installation motrice 10 comprend un système 20 de secours d'injection de fluide, dénommé plus simplement système 20.

Ce système 20 permet d'injecter un fluide 22 à base d'eau, dénommé plus simplement « fluide », dans les turbomoteurs pour améliorer la puissance développée. On se référera à la littérature pour déterminer dans quelles zones du turbomoteur doit être injecté le fluide 22.

Par suite, le système 20 comporte un réservoir 21 dans lequel est stocké le fluide 22. Ce réservoir peut comprendre un contenant par turbomoteur ou un unique contenant selon la représentation de la figure 1.

Le système 20 inclut de plus une conduite de pressurisation par turbomoteur pour relier chaque générateur de gaz au réservoir 21. Ainsi, une première conduite de pressurisation 26 met en communication fluidique le réservoir 21 et le premier générateur de gaz 12 du premier turbomoteur 11. De même, une deuxième conduite de pressurisation 28 met en communication fluidique le réservoir 21 et le deuxième générateur de gaz 17 du deuxième turbomoteur 16.

Ainsi, chaque conduite de pressurisation prélève un gaz d'un turbomoteur pour pressuriser le réservoir 21. Ce gaz peut notamment être de l'air prélevé à la sortie d'un étage de compression d'un générateur de gaz, à savoir en aval de cet étage de compression. Le prélèvement effectué peut être le prélèvement dénommé P3 par l'homme du métier.

Le gaz prélevé sur les générateurs de gaz alimente en effet le réservoir 21 et exerce une pression quasi-constante sur le fluide 22 stocké.

Eventuellement, le réservoir 21 accueille un piston 75 interposé entre les gaz prélevés et le fluide 22. Ce piston peut être calorifugé pour éviter un échauffement indu du fluide 22 provoqué par les gaz prélevés.

Chaque conduite de pressurisation 26, 28 peut être équipée d'un filtre 27, 29 et / ou d'un clapet anti-retour 80.

De plus, le système 20 peut comporter un clapet de surpression 23 pour régler la pression du fluide dans le réservoir, et/ou un clapet de dépressurisation 24 pour faire baisser la pression dans le réservoir 21.

Par ailleurs, le système 20 comporte un dispositif d'injection 35, 40 par turbomoteur pour alimenter en fluide 22 les turbomoteurs si nécessaire. Chaque dispositif d'injection 35, 40 possède une conduite d'injection 36, 41 reliant le réservoir 21 à un organe d'injection 30 incluant au moins une buse d'injection 31. Un distributeur 51, 52 équipe chaque conduite d'injection 36, 41, chaque distributeur 51 permettant l'alimentation en fluide d'un turbomoteur et étant relié au générateur de gaz de l'autre turbomoteur.

Ainsi, le système 20 possède une première conduite d'injection 36 s'étendant du réservoir 21 vers un premier organe d'injection 30' agencé dans le premier turbomoteur 11. La figure 1 ne fait pas apparaître l'agencement du premier organe d'injection 30' dans le premier turbomoteur pour ne pas être alourdie inutilement. La première conduite d'injection 36 est munie d'un premier distributeur 51 en communication fluidique avec la deuxième conduite de pressurisation 28 au travers d'une branche 28' de cette deuxième conduite de pressurisation 28.

De même, le système 20 possède une deuxième conduite d'injection 41 s'étendant du réservoir 21 vers un deuxième organe d'injection 30" agencé dans le deuxième turbomoteur 16. La figure 1 ne fait pas apparaitre l'agencement du deuxième organe d'injection 30" dans le deuxième turbomoteur pour ne pas être alourdie inutilement. La deuxième conduite d'injection 41 est munie d'un deuxième distributeur 52 en communication fluidique avec la première conduite de pressurisation 26 au travers d'une branche 26' de cette première conduite de pressurisation 26.

Ainsi, chaque distributeur associé à un turbomoteur est commandé par l'autre turbomoteur pour être ouverte uniquement lorsque cet autre turbomoteur est en panne. Le premier distributeur s'ouvre donc automatiquement lorsque le deuxième turbomoteur est en panne, alors que le deuxième distributeur s'ouvre automatiquement lorsque le premier turbomoteur est en panne.

Chaque conduite d'injection peut comprendre un filtre 100, et/ou un dispositif de refroidissement 70, voire un conduit de lavage 400 permettant de purger les buses 31 des éventuelles impuretés susceptibles d'obturer ces buses de faible diamètre.

La première conduite d'injection 36 et la deuxième conduite d'injection 41 peuvent éventuellement se rejoindre au niveau du réservoir, ou encore peuvent par exemple déboucher sur deux contenants différents du réservoir 21.

Par ailleurs, le système 20 peut comprendre une conduite de secours 90 en communication fluidique avec le réservoir 21 et la boîte de transmission de puissance 5. La conduite de secours peut inclure une vanne commandée par un dispositif automatique de secours, ou un moyen manuel par exemple.

En outre, le système 20 peut comprendre au moins un calculateur 60 coopérant par un système avionique 61 avec un premier capteur PCUV pour mesurer la pression du fluide dans le réservoir 21, et un capteur de niveau 25 pour mesurer le niveau du fluide 22 dans le réservoir 21.

De plus, le calculateur 60 peut communiquer avec un deuxième capteur PFLU par conduite d'injection 36, 41 pour mesurer la pression régnant dans chaque conduite d'injection 36, 41.

En outre, le système 20 peut comporter une vanne 62 par conduite d'injection, chaque vanne 62 étant commandée par le calculateur 60. Les vannes peuvent être des vannes débitmétrique permettant de régler le débit de fluide au travers d'une conduite d'injection. Chaque vanne est avantageusement placée en amont d'un deuxième capteur afin de pouvoir tester le fonctionnement de ces vannes à l'aide des deuxièmes capteurs.

Au démarrage de l'aéronef 1, chaque générateur de gaz génère un gaz conduit par une conduite de pressurisation vers le réservoir 21 pour pressuriser le fluide 22. De plus, ce gaz obture les distributeurs de fluide.

Dès lors, le fluide stocké dans le réservoir 21 ne peut pas alimenter les buses d'injection.

Le cas échéant, les vannes des conduites d'injection et de la conduite de secours sont fermées.

En cas de panne d'un turbomoteur, le générateur de gaz du turbomoteur en panne n'est plus en mesure d'alimenter le réservoir 21, et au moins un distributeur. Dès lors, le distributeur relié au turbomoteur en fonctionnement s'ouvre et peut être traversé par un fluide pour alimenter des buses d'injection.

De plus, le turbomoteur en fonctionnement continue d'alimenter en gaz le réservoir 21, et donc à pressuriser le fluide 22.

Selon une alternative dépourvue de vannes 62 sur les conduites d'injection, un fluide 22 est alors transmis aux buses d'injection présentes dans le turbomoteur en fonctionnement.

En présence de telles vannes 62, le calculateur 60 peut déterminer la présence de la panne d'un turbomoteur à l'aide de moyens usuels.

Si l'aéronef nécessite un surcroit de puissance, le calculateur ouvre alors la vanne 62 adéquate, à savoir la vanne alimentant le turbomoteur en fonctionnement.

L'installation motrice peut aussi comporter un système d'activation 110 manuel manoeuvrable par un pilote. Ce système d'activation 110 comprend par exemple un moyen de commande 111 commandant des vannes placées sur les conduites de pressurisation pour simuler une panne d'un turbomoteur. Le moyen de commande peut aussi commander les vannes des conduites d'injection le cas échéant.

Ce système 20 est donc un système simple et fiable. Le système peut aussi être aisément testé par le calculateur.

Ainsi, lorsque les vannes 62 des conduites d'injection sont fermées, le calculateur peut :
- vérifier l'étanchéité du système 20 lorsque les turbomoteurs sont à l'arrêt, le niveau de fluide dans le réservoir mesuré à l'aide du capteur de niveau devant être sensiblement constant,
- vérifier la pressurisation du réservoir 21 lorsque les turbomoteurs sont en fonctionnement, la pression du fluide dans le réservoir mesurée avec le premier capteur PCUV devant être supérieure à un seuil de pression,
- vérifier le fonctionnement du clapet de dépressurisation 24 lorsque les turbomoteurs sont à l'arrêt, la pression du fluide dans le réservoir mesuré avec le premier capteur PCUV devant être inférieure à un seuil de pression,
- vérifier l'étanchéité du réservoir 21 avec un turbomoteur à l'arrêt, la variation de la pression du fluide dans le réservoir mesuré avec le premier capteur PCUV durant une plage temporelle de détection devant être inférieure à un seuil,

De plus, le calculateur peut :
- vérifier l'ouverture de chaque vanne 62 des conduites d'injection lorsque les turbomoteurs sont en fonctionnement en ouvrant la vanne à tester, la pression du fluide en aval de la vanne testée qui est mesurée avec un deuxième capteur PFLU devant être supérieure à un seuil de pression,
- vérifier la fermeture de la vanne 62 d'une conduite d'injection communiquant avec un turbomoteur à l'arrêt, la pression du fluide en aval de la vanne testée qui est mesurée avec un deuxième capteur PFLU devant être inférieure à un seuil de pression,

- vérifier l'ouverture d'un distributeur en arrêtant le turbomoteur alimenté par ce distributeur et en fermant la vanne 62 correspondante, la pression du fluide en amont du distributeur testé qui est mesurée avec un deuxième capteur PFLU devant être inférieure à un seuil de pression,
- vérifier la fermeture d'un distributeur en démarrant les turbomoteurs et en ouvrant les vannes 62 des conduites d'injection, le niveau de fluide dans le réservoir qui est mesuré à l'aide du capteur de niveau 25 devant être sensiblement constant,

Selon une première réalisation de l'invention représentée sur la figure 1, chaque distributeur 51, 52 comprend un corps s'étendant longitudinalement d'un orifice d'entrée 53 en communication fluidique avec le réservoir 21, vers un orifice de sorite 54 en communication fluidique avec l'organe d'injection 30. Ce corps enserre un piston 55 pouvant obturer l'orifice d'entrée ou autoriser le passage de fluide de l'orifice d'entrée vers l'orifice de sortie. De plus, le corps enserre un ressort 56 tendant à éviter l'obturation de l'orifice d'entrée 53 par le piston. Par suite, le corps de chaque distributeur 51, 52 est relié à une conduite de pressurisation 26, 28 en aval du piston 55. Dès lors, la pression d'un gaz présent dans cette conduite de pressurisation 26, 28 plaque le piston 55 contre l'orifice d'entrée 53.

Selon une deuxième réalisation de l'invention représentée sur la figure 2, chaque distributeur 51, 52 est relié à la première conduite de pressurisation 26 et à la deuxième conduite de pressurisation 28 par des branches 26', 26", 28', 28" de ces conduites de pressurisation.

Par exemple, chaque distributeur comporte un corps muni d'un orifice d'entrée et d'un orifice de sortie. De plus, ce corps enserre par exemple un piston délimitant un passage non traversant 57 et un passage traversant 58. La différence de pression régnant dans les conduites de pressurisation induit un déplacement du piston des distributeurs pour placer le passage traversant ou le passage non traversant en vis-à-vis de l'orifice d'entrée.

Ainsi, lorsqu'un turbomoteur tombe en panne :
- la conduite d'injection provenant du turbomoteur en fonctionnement déplace le piston du distributeur communiquant avec le turbomoteur en panne pour positionner le passage non traversant de ce piston en face de son orifice d'entrée, pour interdire le passage de fluide vers le turbomoteur en panne,
- la conduite d'injection provenant du turbomoteur en fonctionnement déplace le piston du distributeur communiquant avec le turbomoteur en fonctionnement pour positionner le passage traversant de ce piston en face de son orifice d'entrée, pour autoriser le passage de fluide vers le turbomoteur en fonctionnement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications annexées.

## Revendications

1. Installation motrice (10) munie d'un premier turbomoteur (11) et d'un deuxième turbomoteur (16) comportant chacun un générateur de gaz (12, 17), ladite installation motrice (10) comportant un système (20) de secours d'injection de fluide dans lesdits turbomoteurs (11, 16), ledit système (20) comportant un réservoir (21) contenant un fluide (22) aqueux, ladite installation motrice (10) comportant :
- une première conduite de pressurisation (26) et une deuxième conduite de pressurisation (28) reliant respectivement au réservoir (21) un premier générateur de gaz (12) du premier turbomoteur (11) et un deuxième générateur de gaz (17) du deuxième turbomoteur (16) pour pressuriser ledit fluide (22) dans ledit réservoir (21) avec un gaz prélevé sur chaque générateur de gaz (12, 17),
- un organe d'injection (30) par turbomoteur (11, 13) comportant au moins une buse d'injection (31) dudit fluide (22), un premier dispositif d'injection (35) comportant une première conduite d'injection (36) reliant ledit réservoir (21) à un premier organe d'injection (37) du premier turbomoteur (11), un deuxième dispositif d'injection (40) comportant une deuxième conduite d'injection (41) reliant ledit réservoir (21) à un deuxième organe d'injection (42) du deuxième turbomoteur (16),
- un distributeur (51, 52) disposé le long de chaque conduite d'injection (36, 41), un premier distributeur (51) de la première conduite d'injection (36) communiquant avec la deuxième conduite de pressurisation (28) pour qu'une panne du deuxième turbomoteur (16) entraîne l'ouverture du premier distributeur (51), et un deuxième distributeur (52) de la deuxième conduite d'injection (41) communiquant avec la première conduite de pressurisation (26) pour qu'une panne du premier turbomoteur (11) entraîne l'ouverture du deuxième distributeur (52),
- au moins un calculateur (60), chaque conduite d'injection (36, 41) comportant une vanne débitmétrique (62) pilotée par ledit calculateur (60).

2. Installation motrice selon la revendication 1,
**caractérisée en ce que** ledit réservoir (21) comporte un clapet de surpression (23) pour régler la pression du fluide dans le réservoir.

3. Installation motrice selon l'une quelconque des revendications 1 à 2,
**caractérisée en ce que** ledit réservoir (21) comporte un clapet de dépressurisation (24) pour faire baisser la pression dans ledit réservoir.

4. Installation motrice selon l'une quelconque des revendications 1 à 3,
**caractérisée en ce que** ledit réservoir (21) comporte un capteur de niveau (25).

5. Installation motrice selon l'une quelconque des revendications 1 à 4,
**caractérisée en ce que** chaque générateur de gaz (12, 17) comportant au moins un étage de compression (14, 15), chaque conduite de pressurisation (26, 28) débouche en aval d'un étage de compression (14,15).

6. Installation motrice selon l'une quelconque des revendications 1 à 5,
**caractérisée en ce que** chaque conduite de pressurisation (26, 28) comporte un clapet anti-retour (80).

7. Installation motrice selon l'une quelconque des revendications 1 à 6,
**caractérisée en ce que** chaque conduite de pressurisation (26, 28) comporte un filtre (27, 29).

8. Installation motrice selon l'une quelconque des revendications 1 à 7,
**caractérisée en ce que** chaque distributeur (51, 52) comporte un orifice d'entrée (53) relié au réservoir (21) et un piston (55) apte à obturer ledit orifice d'entrée (53), un ressort (56) tendant à éviter l'obturation dudit orifice d'entrée (53), ledit distributeur (51, 52) étant relié à une conduite de pressurisation (26, 28) en aval du piston (55) pour que la pression d'un gaz présent dans cette conduite de pressurisation (26, 28) plaque ledit piston (55) contre ledit orifice d'entrée (53).

9. Installation motrice selon l'une quelconque des revendications 1 à 7,
**caractérisée en ce que** chaque distributeur (51, 52) est relié à la première conduite de pressurisation (26) et à la deuxième conduite de pressurisation (28).

10. Installation motrice selon l'une quelconque des revendications 1 à 9,
**caractérisée en ce que** l'installation motrice (10) comporte un premier capteur (PCUV) pour mesurer la pression du fluide dans le réservoir (21) et un deuxième capteur (PFLU) par conduite d'injection (36, 41) pour mesurer la pression dans chaque conduite d'injection (36, 41).

11. Installation motrice selon l'une quelconque des revendications 1 à 10,
**caractérisée en ce que** l'installation motrice (10) comporte un dispositif de refroidissement (70) agencé sur chaque conduite d'injection.

12. Installation motrice selon l'une quelconque des revendications 1 à 11,
**caractérisée en ce que** l'installation motrice (10) comporte un piston (75) calorifugé agencé dans ledit réservoir (21) entre ledit fluide (22) et les gaz provenant des turbomoteurs.

13. Installation motrice selon l'une quelconque des revendications 1 à 12,
**caractérisée en ce que** ledit réservoir (21) est partagé en deux contenants, chaque contenant étant relié à une unique conduite d'injection

14. Installation motrice selon l'une quelconque des revendications 1 à 13,
**caractérisée en ce que** l'installation motrice (10) comporte une conduite de secours (90) reliant ledit réservoir à une boîte de transmission de puissance (5) mise en mouvement par lesdits turbomoteurs (11, 16).

15. Installation motrice selon l'une quelconque des revendications 12 à 14,
**caractérisée en ce que** l'installation motrice comporte un système d'activation (110) manuel manoeuvrable par un pilote.

16. Aéronef (1),
**caractérisée en ce que** cet aéronef (1) comporte une installation motrice (10) selon l'une quelconque des revendications 1 à 15.

## Patentansprüche

1. Antriebsanlage (10) mit einem ersten Turbomotor (11) und einem zweiten Turbomotor (16), die jeweils einen Gasgenerator (12, 17) aufweisen, wobei die Antriebsanlage (10) ein Sicherheitssystem (20) zum Einspritzen eines Fluids in die Turbomotoren (11, 16) aufweist, wobei das Sicherheitssystem (20) einen Tank (21) aufweist, der ein wässeriges Fluid (22) enthält, wobei die Antriebsanlage (10) aufweist:
- eine erste Druckleitung (26) und eine zweite Druckleitung (28), die jeweils einen ersten Gasgenerator (12) des ersten Turbomotors (11) und einen zweiten Gasgenerator (17) des zweiten Turbomotors (16) verbinden, um das Fluid (22) in dem Tank (21) mit einem Gas unter Druck zu setzen, das jedem der Gasgeneratoren (12, 17) entnommen wurde,
- ein Einspritzelement (30) pro Turbomotor (11, 13) mit mindestens einer Düse (31) zum Einspritzen des Fluids (22), wobei eine erste Einspritzvorrichtung (35) mit einer ersten Einspritzleitung (36) den Tank (21) mit einem ersten Einspritzelement (37) des ersten Turbomotors (11) verbindet, und eine zweite Einspritzvorrichtung (40) mit einer zweiten Einspritzleitung (41) den Tank (21) mit einem zweiten Einspritzelement (42) des zweiten Turbomotors (16) verbindet,
- einen Verteiler (51, 52), der in jeder Einspritzleitung (36, 41) angeordnet ist, wobei ein erster Verteiler (51) der ersten Einspritzleitung (36) mit der zweiten Druckleitung (28) verbunden ist, damit ein Ausfall des zweiten Turbomotors (16) die Öffnung des ersten Verteilers (51) bewirkt, und ein zweiter Verteiler (52) der zweiten Einspritzleitung (41) mit der ersten Druckleitung (26) verbunden ist, damit ein Ausfall des ersten Turbomotors (11) die Öffnung des zweiten Verteilers (52) bewirkt,
- mindestens einen Rechner (60), wobei jede Einspritzleitung (36, 41) ein Durchfluss-Dosierventil (62) aufweist, das von dem Rechner (60) gesteuert wird.

2. Antriebsanlage nach Anspruch 1,
**dadurch gekennzeichnet, dass** der Tank (21) ein Überdruckventil (23) aufweist, um den Druck des Fluids in dem Tank zu regeln.

3. Antriebsanlage nach einem der Ansprüche 1 bis 2,
**dadurch gekennzeichnet, dass** der Tank (21) ein Druckablassventil (24) aufweist, um den Druck in dem Tank abzusenken.

4. Antriebsanlage nach einem der Ansprüche 1 bis 3,
**dadurch gekennzeichnet, dass** der Tank (21) einen Pegelsensor (25) aufweist.

5. Antriebsanlage nach einem der Ansprüche 1 bis 4,
**dadurch gekennzeichnet, dass** jeder Gasgenerator (12, 17) mindestens eine Verdichterstufe (14, 15) aufweist, wobei jede Druckleitung (26, 28) stromab bezüglich einer Verdichterstufe (14, 15) mündet.

6. Antriebsanlage nach einem der Ansprüche 1 bis 5,
**dadurch gekennzeichnet, dass** jede Druckleitung (26, 28) ein Rückschlagventil (80) aufweist.

7. Antriebsanlage nach einem der Ansprüche 1 bis 6,
**dadurch gekennzeichnet, dass** jede Druckleitung (26, 28) einen Filter (27, 29) aufweist.

8. Antriebsanlage nach einem der Ansprüche 1 bis 7,
**dadurch gekennzeichnet, dass** jeder Verteiler (51, 52) eine Eingangsöffnung (53) aufweist, die mit dem Tank (21) verbunden ist, und einen Kolben (55), der diese Eingangsöffnung (53) verschließen kann, wobei eine Feder (56) den Verschluss dieser Eingangsöffnung (53) zu verhindert sucht, wobei der Verteiler (51, 52) mit einer Druckleitung (26, 28) stromab bezüglich des Kolbens (55) verbunden ist, damit der Druck eines Gases, welches in der Druckleitung (26, 28) vorhanden ist, den Kolben (55) gegen die Eingangsöffnung (53) drückt.

9. Antriebsanlage nach einem der Ansprüche 1 bis 7,
**dadurch gekennzeichnet, dass** jeder Verteiler (51, 52) mit der ersten Druckleitung (26) und der zweiten Druckleitung (28) verbunden ist.

10. Antriebsanlage nach einem der Ansprüche 1 bis 9,
**dadurch gekennzeichnet, dass** die Antriebsanlage (10) einen ersten Sensor (PCUV) aufweist zum Messen des Drucks des Fluids im Tank (21) und einen zweiten Sensor (PFLU) pro Einspritzleitung (36, 41) zum Messen des Drucks in jeder Einspritzleitung (36, 41).

11. Antriebsanlage nach einem der Ansprüche 1 bis 10,
**dadurch gekennzeichnet, dass** die Antriebsanlage (10) eine Kühlvorrichtung (70) aufweist, die auf jeder Einspritzleitung angeordnet ist.

12. Antriebsanlage nach einem der Ansprüche 1 bis 11,
**dadurch gekennzeichnet, dass** die Antriebsanlage (10) einen wärmegedämmten Kolben (75) aufweist, der in dem Tank (21) zwischen dem Fluid (22) und den Gasen, die von den Turbomotoren stammen, angeordnet ist.

13. Antriebsanlage nach einem der Ansprüche 1 bis 12,
**dadurch gekennzeichnet, dass** der Tank (21) in zwei Behälter aufgeteilt ist, wobei jeder Behälter mit einer einzigen Einspritzleitung verbunden ist.

14. Antriebsanlage nach einem der Ansprüche 1 bis 13,
**dadurch gekennzeichnet, dass** die Antriebsanlage (10) eine Notleitung (90) aufweist, die den Tank mit einem Leistungsgetriebe (5), das von den Turbomotoren (11, 16) angetrieben wird, verbindet.

15. Antriebsanlage nach einem der Ansprüche 12 bis 14,
**dadurch gekennzeichnet, dass** die Antriebsanlage ein System (110) zur manuellen Aktivierung aufweist, das von einem Piloten betätigbar ist.

16. Luftfahrzeug (1),
**dadurch gekennzeichnet, dass** dieses Luftfahrzeug (1) eine Antriebsanlage (10) nach einem der Ansprüche 1 bis 15 aufweist.

## Claims

1. Power plant (10) provided with a first turboengine (11) and a second turboengine (16) each comprising a gas generator (12, 17), said power plant (10) comprising an emergency system (20) for injecting fluid into said turboengines (11, 16), said system (20) comprising a tank (21) containing an aqueous fluid (22), said power plant (10) comprising:
- a first pressurization pipe (26) and a second pressurization pipe (28) respectively connecting the tank (21) to a first gas generator (12) of the first turboengine (11) and a second gas generator (17) of the second turboengine (16) in order to pressurize said fluid (22) in said tank (21) with a gas taken from each gas generator (12, 17),
- one injection member (30) per turboengine (11, 13) comprising at least one injection nozzle (31) for injecting said fluid (22), a first injection device (35) comprising a first injection pipe (36) connecting said tank (21) to a first injection member (37) of the first turboengine (11), a second injection device (40) comprising a second injection pipe (41) connecting said tank (21) to a second injection member (42) of the second turboengine (16),
- a distributor (51, 52) arranged along each injection pipe (36, 41), a first distributor (51) of the first injection pipe (36) communicating with the second pressurization pipe (28) so that a failure of the second turboengine (16) brings about the opening of the first distributor (51), and a second distributor (52) of the second injection pipe (41) communicating with the first pressurization pipe (26) so that a failure of the first turboengine (11) brings about the opening of the second distributor (52),
- at least one computer (60), each injection pipe (36, 41) comprising a flow-metering valve (62) controlled by said computer (60).

2. Power plant according to claim 1,
**characterized in that** said tank (21) comprises an overpressure valve (23) for controlling the pressure of the fluid in the tank.

3. Power plant according to any one of claims 1 to 2,
**characterized in that** said tank (21) comprises a depressurization valve (24) for lowering the pressure in said tank.

4. Power plant according to any one of claims 1 to 3,
**characterized in that** said tank (21) comprises a level sensor (25).

5. Power plant according to any one of claims 1 to 4,
**characterized in that** each gas generator (12, 17) comprising at least one compression stage (14, 15), each pressurization pipe (26, 28) opens out downstream of a compression stage (14, 15).

6. Power plant according to any one of claims 1 to 5,
**characterized in that** each pressurization pipe (26, 28) comprises a nonreturn valve (80).

7. Power plant according to any one of claims 1 to 6,
**characterized in that** each pressurization pipe (26, 28) comprises a filter (27, 29).

8. Power plant according anv one of claims 1 to 7.
**characterized in that** each distributor (51, 52) comprises an inlet orifice (53) connected to the tank (21) and a piston (55) suitable for closing said inlet orifice (53), a spring (56) tending to prevent the closing of said inlet orifice (53), said distributor (51, 52) being connected to a pressurization pipe (26, 28) downstream of the piston (55) so that the pressure of a gas present in this pressurization pipe (26, 28) presses said piston (55) against said inlet orifice (53).

9. Power plant according to any one of claims 1 to 7,
**characterized in that** each distributor (51, 52) is connected to the first pressurization pipe (26) and to the second pressurization pipe (28).

10. Power plant according to any one of claims 1 to 9,
**characterized in that** the power plant (10) comprises a first pressure sensor (PCUV) for measuring the pressure of the fluid in the tank (21) and a second sensor (PFLU) per injection pipe (36, 41) for measuring the pressure in each injection pipe (36, 41).

11. Power plant according to any one of claims 1 to 10,
**characterized in that** the power plant (10) comprises a cooling device (70) arranged on each injection pipe.

12. Power plant according to any one of claims 1 to 11, **characterized in that** the power plant (10) comprises a thermally insulating piston (75) arranged in said tank (21) between said fluid (22) and the gases coming from the turboengines.

13. Power plant according to any one of claims 1 to 12,
**characterized in that** said tank (21) is divided into two containers, each container being connected to a single injection pipe.

14. Power plant according to any one of claims 1 to 13,
**characterized in that** the power plant (10) comprises an emergency pipe (90) connecting said tank to a power transmission gearbox (5) set in motion by said turboengines (11, 16).

15. Power plant according to any one of claims 12 to 14,
**characterized in that** the power plant comprises a manual activation system (110) operable by a pilot.

16. Aircraft (1),
**characterized in that** the aircraft (1) comprises a power plant (10) according to any one of claims 1 to 15.
